# EUROPÄISCHE PATENTANMELDUNG

(11) **EP 0 604 842 A2**
(43) Veröffentlichungstag der Anmeldung: **06.07.1994**
(21) Anmeldenummer: 93120263.4
(22) Anmeldetag: 16.12.1993
(51) Int. Cl.: C08K 5/3492

(54) **Flammfeste Kunststoffe mit einem Gehalt an Trihydrazinotriazin, Triguanidinotriazin oder deren Salzen**

(30) Priorität: 28.12.1992 AT 2589/92
(71) Anmelder: DSM Chemie Linz GmbH, 4021 Linz (AT)
(72) Erfinder: Horacek, Heinrich, Dr., A-4048 Puchenau (AT)
(74) Vertreter: Kunz, Ekkehard, Dr.

(57) **Zusammenfassung**

Flammfeste Kunststoffe, die Trihydrazinotriazin und/oder Triguanidinotriazin und/oder deren Phosphorsäure- oder Borsäuresalze als Flammhemmer enthalten.

## Beschreibung

Die Erfindung betrifft Kunststoffe, die zur Verbesserung ihrer Flammfestigkeit Trihydrazinotriazin, Triguanidinotriazin oder deren Salze enthalten.

Es ist bereits eine Vielzahl von Flammhemmern, wie etwa halogenhaltige oder stickstoffhaltige Flammhemmer, bekannt. Die wertmäßig an der Spitze stehenden halogenhaltigen Flammhemmer zeigen zwar eine gute flammhemmende Wirkung, sie weisen jedoch den entscheidenden Nachteil auf, daß sie im Brandfall, besonders bei längeren Bränden, toxische und korrosive Chlor- und Bromverbindungen freisetzen. Um diese Nachteile zu vermeiden, werden vielfach bereits halogenfreie, stickstoffhaltige Flammschutzmittel, beispielsweise Melamin oder Melamincyanurat (DE-OS 27 40 092), eingesetzt. Stickstoffhaltige Flammhemmer entziehen den Kunststoffen im Brandfall durch Schmelzen, Sublimieren oder Zersetzen Wärme und spalten dabei unbrennbare, nicht toxische und nicht korrosive Gase ab. Melamin und auch Melamincyanurat sind jedoch für eine Vielzahl gebräuchlicher Kunststoffe, wie etwa für Polyethylen, Polypropylen oder Polystyrol, als Flammhemmer nicht geeignet. Melamin weist bei der Anwendung als Flammhemmer für andere Kunststoffe unter anderem auch den Nachteil auf, daß es bei der Verarbeitung der Kunststoffe zum Ausblühen neigt, wodurch es teilweise an die Oberfläche wandert und beispielsweise in Spritzgußformen einen störenden Belag bilden kann. Melamincyanurat neigt hingegen bei der Einarbeitung in einen Kunststoff zur Sublimation, wodurch der Kunststoff etwas aufschäumt und die Schüttdichte verringert wird.

Aufgrund der Nachteile von Melamin und Melamincyanurat, war es Aufgabe der vorliegenden Erfindung, andere stickstoffhaltige Flammhemmer zu finden. Unerwarteterweise konnte diese Aufgabe mit Trihydrazinotriazin (THT), Triguanidinotriazin (TGT) und deren Phosphorsäure- oder Borsäuresalzen gelöst werden.

Gegenstand der Erfindung sind demnach flammfeste Kunststoffe, die dadurch gekennzeichnet sind, daß sie Trihydrazinotriazin und/oder Triguanidinotriazin und/oder deren Phosphorsäure- oder Borsäuresalze enthalten.

THT ist beispielsweise aus WO 90/05123 als Treibmittel für Kunststoffschäume bekannt, die Herstellung wird beispielsweise in R. Stolle et al., Chemische Berichte (1954) S 2338 beschrieben.
TGT ist hingegen als Antitumormittel aus H. Tomomatsu et al., Acta Medica Univ. Kagoshima, Vol. 17, No. 2, (1975) pages 99 - 111 bekannt und kann beispielsweise nach Chemical Abstracts 74/141885 hergestellt werden.
Erfindungsgemäß eignen sich THT, TGT und deren Salze sowohl für thermoplastische als auch für duromere oder elastomere Kunststoffe, deren Verarbeitungstemperatur unter 280°C liegt, als Flammhemmer. Bevorzugte Salze von THT und TGT sind Borsäure- und Phosphorsäuresalze.

Als Kunststoffe kommen beispielsweise solche aus der Gruppe der Polyolefine, wie etwa Polyethylen, Polypropylen, bzw. Ethylen-Propylen-Copolymere, Polybutylen oder Polymethylpenten, sowie Polyvinylacetate, Polyvinylchlorid, Polyamide, Polystyrol, Polyacrylnitrile oder Polyacrylnitril enthaltende Kunststoffe, wie z. B. ABS (Acrylnitril-Butadien-Styrol Copolymer) oder SAN (Styrol-Acrylnitril-Copolymer), thermoplastische oder vernetzte Polyurethane, ungesättigte oder vernetzte Polyester, Epoxide, Acrylharze, Harnstoff-, Melamin- oder Phenolformaldehydharze in Frage. Die Kunststoffe können auch geschäumt sein. Weiters ist es möglich, Mischungen verschiedener Kunststoffe oder Copolymere aus verschiedenen Monomeren, beispielsweise Ethylen-Propylen-Copolymere, mit THT oder TGT oder deren Phosphorsäure- oder Borsäuresalze flammhemmend auszurüsten.

Bevorzugt werden THT, TGT oder deren Salze bei Polyolefinen, Polystyrol, Polyvinylchlorid, ungesättigten Polyesterharzen, Polyurethanen und Epoxiden als Flammhemmer eingesetzt.

Außer der guten flammhemmenden Wirkung besitzen THT und TGT den zusäztlichen Vorteil, daß sie schwer wasserlöslich sind, sodaß sie bei Waschvorgängen oder Freibewitterung nicht herausgelöst werden.

Weiters blühen THT, TGT und deren Salze bei der Verarbeitung der Kunststoffe nicht aus, und die Schüttdichte der flammhemmend ausgerüsteten Kunststoffe wird im Vergleich zu den reinen Kunststoffen sogar erhöht.

THT, TGT und deren Salze können jedes für sich alleine oder gemeinsam oder in Verbindung mit anderen Flammhemmern eingesetzt werden. Als andere Flammhemmer eignen sich vorzugsweise halogenfreie Flammhemmer auf Phosphorbasis, beispielsweise Ammoniumpolyphosphat, Phosphorsäureester und Phosphor oder Flammhemmer auf Basis von Borsäureester.

Bevorzugt werden THT, TGT oder deren Salze verwendet, bei denen mindestens 95 Gew.% eine Korngröße von maximal 0,025 mm besitzen.
Die Herstellung der flammfesten Kunststoffe erfolgt beispielsweise durch Mischen von THT, TGT oder deren Salzen mit dem jeweiligen Kunststoff. Im Falle von thermoplastischen Kunststoffen kann die Mischung auch beispielsweise in einem Extruder aufgeschmolzen und anschließend homogenisiert werden. Im Falle von Reaktionsharzen ist es möglich THT, TGT oder ihre Salze bereits den Reaktionskomponenten des Kunststoffes im Zuge seiner Herstellung zuzusetzen.
Beispielsweise ist es im Falle von Polyurethanen möglich, THT, TGT oder deren Salze und gegebenenfalls weitere Flammhemmer bereits den Polyolen oder den Polyisocyanaten vor der Polymerisationsreaktion zuzusetzen.

Der Gehalt an Flammhemmer im fertigen Kunststoff beträgt je nach Art des Kunststoffes und entsprechend den jeweiligen Anforderungen an die Flammbeständigkeit üblicherweise 1 bis 40 Gew.%, bevorzugt 5 bis 35 Gew.%.

In den nachfolgenden Beispielen wurden folgende Kunststoffe flammhemmend ausgerüstet:
- PE: Polyethylen (Daplen 2414D, PCD)
- PS: Polystyrol (PS S 6600 Natur E 990, Shell)
- PVC: Polyvinylchlorid (Vinnol MSA 633/1M, Wacker)
Die Flammfestigkeit der Kunststoffe wurde nach dem Brenntest Underwriter Laboratories Nr. 94 (UL 94) geprüft.
Dazu wurden 2 Mustersätze zu je 3 Musterstücken, die 127 mm lang, 12,7 mm breit und 3,2 mm dick waren angefertigt. Ein Mustersatz wurde direkt für den Test verwendet, der andere zuerst 7 Tage in einem Ofen bei 70°C getrocknet, über Kalziumchlorid getrocknet und mindestens 4 Stunden bei Raumtemperatur abkühlen gelassen, bevor er dem Test unterzogen wurde.
Die Probenstücke wurden dann so in vertikaler Richtung über einem Brenner angeordnet, daß die 19 mm hohe, blaue Flamme 9,5 mm unter dem Teststückende endete. Die Flamme wurde 10 Sekunden auf das Teststück gerichtet, anschließend entfernt und die Brenndauer des Teststückes gemessen. Wenn das Teststück 10 Sekunden nach Entfernen der Flamme zu brennen aufgehört hat, wurde die Flamme weitere 10 Sekunden unter das Teststück gehalten, neuerlich entfernt und wieder die Brenndauer gemessen. Die Brandklasse V - 0 wurde dann erreicht, wenn
- alle 6 Probestücke eine maximale Brenndauer von 10 Sekunden nicht überschritten haben
- kein Nachbrennen während oder nach einer der beiden Flammen-Anwendung auftrat und
- das Glühen (sichtbare Lichtausströmung, die nicht von der Flamme herrührt) nicht länger als weitere 10 Sekunden andauerte, nachdem die Flamme nach der zweiten Anwendung der Testflamme erlöscht ist.

### Beispiel 1: THT-Phosphorsäuresalz

24 g 85 % Phosphorsäure und 34,2 g THT in 70 ml H₂O wurden auf 70°C erhitzt. Nach 2 Stunden Rückflußkochen wurde der entstandene Niederschlag abfiltriert, mit 100ml H₂O gewaschen und getrocknet.

Ausbeute 94 % der Theorie

### Beispiel 2: TGT-Borsäuresalz

6,18 g Borsäure wurden in 70 ml H₂O gelöst, 25,5 g TGT zugegeben und 3 Stunden bei Rückflußtemperatur gekocht. Der entstandene Niederschlag wurde abfiltriert, mit 100 ml H₂O gewaschen und getrocknet.

Ausbeute 90 % der Theorie

### Beispiel 3

Einem Zweischneckenexruder (LSM 30/34 GL 9R, Fa. Leistritz) wurden getrennt voneinander 5 kg/h Daplen 2414 D und 1,25 kg/h THT zudosiert, die Mischung bei 200°C aufgeschmolzen, homogenisiert, über eine 2 mm Lochdüse extrudiert und mittels Kaltabschlag granuliert. Die Granulate wurden anschließend auf einer Heißpresse bei 150°C zu 3,2 mm dicken Plättchen verpreßt, die gemäß UL 94 auf ihre Flammfestigkeit geprüft wurden. Die Flammfestigkeit lag bei V-0, entsprechend einer maximalen Nachbrenndauer von 10 sec nach 10 sec Beflammung.

### Beispiel 4 - 7

Analog Bsp. 1 wurden Probenplättchen aus mit TGT, THT-Phosphorsäure-Salz, TGT-Phosphorsäure-Salz oder TGT-Borsäure-Salz flammfest ausgerüsteten Kunststoffgranulaten hergestellt, wobei jedoch die in Tabelle 1 angeführten Kunststoffe und Mengen (Gew.%) an Flammhemmern eingesetzt wurden.

Die Flammfestigkeit entsprach in allen Fällen der Brandklasse V - 0.

### Beispiel 8

Auf einem Leistritz Zweischneckenextruder wurde PSS 6600 und THT bei 200°C extrudiert. Der Durchsatz betrug 5 kg/h PSS 6600 und 1,25 kg/h THT. Nach dem Kaltabschlag lag ein Granulat mit ca 2 mm Durchmesser vor, das bei 200°C zu 3,2 mm dicken Plättchen verpreßt wurde.

Die Flammfestigkeit entsprach der Brandklasse V - 0.

### Beispiel 9

Analog Bsp. 8 wurden Probeplättchen aus PSS 6600 und TGT hergestellt.
Die Flammfestigkeit entsprach der Brandklasse V - 0.

### Beispiel 10 und 11

Auf einem Leistritz Zweischneckenextruder wurde Vinnol MSA 633/1M mit THT bzw. TGT bei 170°C extrudiert.
Vinnol MSA 633/1M wurde in einer Menge von jeweils 5 kg/h zudosiert, THT bzw. TGT in Mengen von 1,25 kg/h.
Das Aufschmelzen und Homogenisieren wurde bei 170°C durchgeführt, das Polymere über eine 2 mm Lochdüse extrudiert und mittels Kaltabschlag granuliert. Das Granulat wurde bei 150°C zu 3,2 mm dicken Platten verpreßt.

Die Flammfestigkeit betrug jeweils Brandklasse V - 0.

### Vergleichsbeispiele VI - VIII

Analog zu Beispiel 1 wurden Probeplättchen aus PE, PS und PVC ohne Flammhemmer hergestellt.
Die Proben verbrannten, die Flammfestigkeit entsprach nicht der Brandklasse V - 0, entsprechend einer Nachbrennzeit von maximal 10 Sekunden.

### Vergleichsbeispiele VIV - VV

Auf einem Zweischneckenextruder wurde PE mit 25 bzw. 50 Gew.% Melamincyanurat MC "C" bei 180°C homogen vermischt und granuliert.

Die Granulate wurden anschließend zu 3,2 mm dicken Plättchen verpreßt.

Die Flammfestigkeit der beiden Proben entsprach jeweils nur der Brandklasse V - 2.

**Tabelle 1**

| Nr. | Kunststoff | Flammhemmer | Gew. % | Brandklasse | Granulat-Schüttdichte g/l |
|---|---|---|---|---|---|
| 1 | PE | THT | 25 | V - 0 | 650 |
| 2 | PE | TGT | 25 | V - 0 | 660 |
| 3 | PE | THT.P | 20 | V - 0 | 660 |
| 4 | PE | TGT.P | 20 | V - 0 | 670 |
| 5 | PE | TGT.B | 20 | V - 0 | 680 |
| 6 | PS | THT | 35 | V - 0 | 700 |
| 7 | PS | TGT | 35 | V - 0 | 690 |
| 8 | PVC | THT | 10 | V - 0 | 750 |
| 9 | PVC | TGT | 10 | V - 0 | 760 |
| V I | PE | - | 0 | brennt | 650 |
| V II | PS | - | 0 | brennt | 670 |
| V III | PVC | - | 0 | brennt | 700 |
| V IV | PE | MC''C'' | 25 | V - 2 | 700 |
| V V | PE | MC''C'' | 50 | V - 2 | 720 |

## Patentansprüche

1. Flammfeste Kunststoffe, dadurch gekennzeichnet, daß sie Trihydrazinotriazin und/oder Triguanidinotriazin und/oder deren Phosphorsäure- oder Borsäuresalze enthalten.

2. Flammfeste Kunststoffe nach Anspruch 1, dadurch gekennzeichnet, daß sie eine Verarbeitungstemperatur unter 280°C besitzen.

3. Flammfeste Kunststoffe gemäß Anspruch 1 oder 2, dadurch gekennzeichnet, daß sie aus Polyolefinen, Polyvinylchlorid, ungesättigten Polyesterharzen, Polyurethanen, Epoxiden oder Polystyrol und Trihydrazinotriazin und/oder Triguanidinotriazin und/oder deren Phosphorsäure oder Borsäuresalzen bestehen.

4. Flammfeste Kunststoffe gemäß einem der Ansprüche 1 bis 3, dadurch gekennzeichnet, daß sie 1 - 40 Gew.%, bevorzugt 5 - 35 Gew.% an Trihydrazinotriazin,Triguanidinotriazin oder deren Phosphorsäure- oder Borsäuresalzen enthalten.

5. Flammfeste Kunststoffe gemäß einem der Ansprüche 1 bis 4, dadurch gekennzeichnet, daß mindestens 95 Gew.% von Trihydrazinotriazin, Triguanidinotriazin oder deren Phosphorsäure- oder Borsäuresalzen eine Korngröße von maximal 0,025 mm aufweisen.

6. Flammfeste Kunststoffe gemäß einem der Ansprüche 1 bis 5, dadurch gekennzeichnet, daß sie zusätzlich weitere Flammhemmer enthalten.

7. Verfahren zur Erhöhung der Flammfestigkeit von Kunststoffen dadurch gekennzeichnet, daß den Kunststoffen oder den Reaktionskomponenten zur Herstellung der Kunststoffe Trihydrazinotriazin und/oder Triguanidinotriazin und/oder deren Phosphorsäure- oder Borsäuresalze als Flammhemmer zugesetzt werden.

8. Verwendung von Trihydrazinotriazin und Triguanidinotriazin und deren Phosphorsäure- oder Borsäuresalze als Flammhemmer für Kunststoffe.
